# EUROPÄISCHE PATENTSCHRIFT

(11) **EP 0 503 383 B1**
(45) Veröffentlichungstag und Bekanntmachung des Hinweises auf die Patenterteilung: **06.12.1995**
(21) Anmeldenummer: 92103331.2
(22) Anmeldetag: 27.02.1992
(51) Int. Cl.: C04B 18/16, C04B 28/14, E04C 2/04, B28B 11/04

(54) **Gipsplatte mit hohem Feuerwiderstand**
Gypsum board with a high fire resistance
Plaque en plâtre à haute résistance au feu

(30) Priorität: 09.03.1991 DE 4107623
(43) Veröffentlichungstag der Anmeldung: 16.09.1992
(73) Patentinhaber: Gebr. Knauf Westdeutsche Gipswerke KG, D-97343 Iphofen (DE)
(72) Erfinder: Neuhauser, Gerhard, Dr., W-8710 Kitzingen (DE)
(74) Vertreter: Werner, Hans-Karsten, Dr.Dipl.-Chem.

(56) Entgegenhaltungen:
- EP-A- 0 395 165
- EP-A- 0 427 063
- DE-A- 3 308 585
- FR-A- 2 547 533
- US-A- 3 376 147
- CHEMICAL ABSTRACTS, Band 92, Nr. 24, 16. Juni 1980, Columbus, OH (US); I. TERADA et al., Nr. 202577d

## Beschreibung

Gegenstand der vorliegenden Erfindung ist eine Gipsplatte mit hohem Feuerwiderstand mit einem geschnittene mineralische Fasern, vorzugsweise Glasfasern enthaltenden Gipskern.

Gattungsgemäße Gipsplatten sind beispielsweise aus der US-A-3,376,147 bekannt, wobei weitere wesentliche Bestandteile des Gipskerns ungeblähte Vermiculite und ungeblähte Perlite sind. Diese Zusätze sollen die gefürchtete Schrumpfung und Rissebildung bei Hitzeeinwirkung vermeiden. Es sind Zusätze von ca. 2 % Vermiculite und ca. 3 % Perlite neben ca. 0,45 bis 0,5 Gew.-% Glasfasern nötig, um zu einigermaßen brauchbaren Ergebnissen zu kommen. Vermiculite und Perlite sind relativ teure Zusatzstoffe. Die mit ihrer Hilfe herstellbaren Gipsplatten mit hohem Feuerwiderstand lassen qualitativ durchaus noch Wünsche offen.

Es hat nicht an Versuchen gefehlt, Gipsplatten mit hohem Feuerwiderstand zu entwickeln. So sind schon aus der DE-B-10 95 187 feuerhemmende Bauplatten bekannt, welche unter Zusatz von 8 bis 12 Gew.-% Vermiculite und 8 bis 12 Gew.-% geblähter Perlite sowie 0,5 bis 2 Gew.-% Papierschnitzel hergestellt worden sind. Die Papierschnitzel können als zusätzliche Beimischung zu Mineralfasern und/oder Asbestfasern oder auch ohne Zugabe von Fasern beigegeben werden. Die hohen Gehalte an Vermiculite und Perlite sind kostenmäßig und von den Mengen der Rohstoffe her nicht zu verantworten.

Aus der DE-A-33 22 067 ist ein feuerhemmendes Bauelement bekannt, welches aus 40 bis 55 Gew.-% Halbhydratgips, 20 bis 45 Gew.-% Portlandzement und 10 bis 40 Gew.-% endotherm wirkenden Bestandteilen besteht, wobei bis zu 10 Gew.-% Glasfasern zugesetzt werden können. Die bei Temperaturen über 300°C endotherm wirkenden Bestandteile sind zum Beispiel Tonerdeschmelzzement, Dolomit, Calcit, Fetton, unexpandierter Vermiculit oder ungeblähter Perlit sowie Aluminiumhydroxid. Diese Platten können im Gießverfahren oder auf Gipskartonplattenanlagen oder nach dem Hatschek-Verfahren hergestellt werden. Diese Platten können somit nur bis 55 Gew.-% Halbhydratgips enthalten und benötigen erhebliche Mengen an Portlandzement und anderen teilweise wertvollen Zusatzstoffen.

Aus der US-A-3,616,173 sind feuerwiderstandsfähige Gipsbauplatten mit relativ geringem Raumgewicht und geringer Schrumpfung bei hohen Temperaturen bekannt. Sie enthalten neben Glasfasern ca. 1 bis 3,5 Gew.-% Vermiculite, 0,5 bis 20 Gew.-% feinkörnige anorganische Stoffe aus der Gruppe der Tone sowie gegebenenfalls kolloides Siliziumdioxid oder Aluminiumoxid. Als Tone sind Kaolinit, Montmorillonit, Illit, Chlorit, Attapulgit etc. genannt. Auch hier handelt es sich um relativ wertvolle Zusatzstoffe. Die so erhaltenen Platten lassen insbesondere bezüglich der mechanischen Eigenschaften Wünsche offen.

Aus der US-A-4,647,486 sind Gipsplatten mit hohem Feuerwiderstand bekannt, welche als wesentlichen Bestandteil 2 bis 40 Gew.-% Anhydrit II gegebenenfalls zusammen mit Glasfasern, unexpandiertem Vermiculit oder Wollastonit enthalten. Optimale Ergebnisse wurden nur erzielt unter Verwendung von totgebranntem Calciumsulfat-Anhydrit II-Fasern, einem ebenfalls relativ teurem Zusatzstoff.

Ebenfalls wertvolle und relativ teure Zusatzstoffe, wie Bor-, Aluminium- und Siliciumverbindungen, werden für eine in EP-0 258 064 beschriebene hochverstärkte, feuerbeständige Gipszusammensetzung benötigt.

Ein Verfahren zum Herstellen von Leichtbauplatten aus einem porösen Zuschlagstoff und Gips, wobei der poröse Zuschlagstoff dampfgehärtetes Gasbetonbruch- und/oder -abfallmaterial ist und mindestens 50 % in der fertigen Leichtbauplatte enthalten ist, wird in DE-B-25 24 147 beschrieben. Diese durch Gießen in Formen hergestellte Platte enthält keine die mechanischen Eigenschaften und den Feuerwiderstand verbessernden Glasfasern.

Eine Platte mit einer Basisschicht, bestehend aus Gips, lignozellulose- und/oder zellulosehaltigen und/oder anorganischen Teilchen und mit wenigstens einer Deckschicht aus Gips und Füllstoff wird in DE-A-33 08 585 offenbart. Diese in der Oberflächenqualität verbesserte Platte besitzt jedoch einen geringen Feuerwiderstand.

Die vorliegende Erfindung hat sich die Aufgabe gestellt, Gipsbauplatten mit hohem Feuerwiderstand mit einem geschnittene Glasfasern enthaltenden Gipskern weiter zu verbessern und dabei möglichst wenig teure Zusatzstoffe zu verwenden. Diese Aufgabe kann überraschend dadurch gelöst werden, daß der Gipskern mindestens 2 Gew.-%, vorzugsweise 5 bis 10 Gew.-%, Gasbetongranulat enthält, wobei das Gasbetongranulat eine Korngröße bis 2 mm, bevorzugt bis 1 mm, aufweist.

Gasbetongranulat fällt bei der Herstellung von Gasbeton in relativ großen Mengen an und kann bisher kaum wiederverwertet oder weiterverwertet werden. Weiterhin läßt sich Gasbetongranulat relativ einfach und in größeren Mengen gewinnen beim Abbruch von Bauwerken aus Gasbeton. Bisher mußte dieses Material als voluminöser Bauschutt deponiert werden und konnte auch keiner weiteren Verwendung zugeführt werden. Gasbetonabfälle können aufgrund ihres mechanischen Verhaltens relativ leicht und kostengünstig vermahlen werden auf Korngrößen unter 2 mm. Gegebenenfalls wird das Überkorn abgetrennt und erneut dem Mahlprozeß zugeführt.

Die erfindungsgemäße Verwendung von Gasbetongranulat stellt somit eine ökologisch und ökonomisch sinnvolle Wiederverwendung von Gasbetonabfällen dar. Sie ermöglicht darüber hinaus die Herstellung von Gipsplatten mit hohem Feuerwiderstand und ausgezeichneten mechanischen Eigenschaften. Diese Eigenschaften sind bisher nicht erklärbar.

Die erfindungsgemäße Gipsplatte kann im allgemeinen als weiteren Zusatz relativ geringe Mengen an ungeblähtem Vermiculite enthalten, wobei im allgemeinen ca. 1 Gew.-%, maximal 2 Gew.-%, zugesetzt werden. Der Zusatz von Vermiculite kompensiert beim Erhitzen die Schrumpfung, jedoch bilden sich bei höheren Zusatzmengen im allgemeinen Risse. Bei Einsatz von höheren Konzentrationen als 2 Gew.-% Vermiculite verschlechtert sich der Gefügezusammenhalt der Platte bei hoher Temperatur.

Wesentlicher Bestandteil der erfindungsgemäßen Gipsplatte sind geschnittene Glasfasern. Prinzipiell können auch Mineralfasern oder andere anorganische Fasern eingesetzt werden, jedoch sind Glasfasern wegen des Preises und/oder der Verarbeitbarkeit bevorzugt. Diese werden üblicherweise in Mengen zwischen 0,15 und 0,4 Gew.-%, vorzugsweise in Mengen zwischen 0,2 und 0,3 Gew.-%, zugesetzt. Meist handelt es sich um Glasfasern, die auf Längen von ca. 12 mm geschnitten sind und sich in dieser Form und diesen Mengen im Gipskern gut dispergieren lassen.

Der Gipskern wird in üblicherweise aus abbindefähigem Gips, vorzugsweise üblichem Stuckgips, hergestellt. Dieser Stuckgips kann sowohl aus natürlichem Gips oder auch aus technischen Gipsen calciniert werden.

Die Herstellung der erfindungsgemäßen Gipsplatte kann auf bekannten Produktionsanlagen für Gipskartonplatten sowie anderen Gipsplatten hergestellt werden. Übliche Zusätze sind beispielsweise Stärke, Schaummittel sowie feingemahlenes Dihydrat als Abbindebeschleuniger.

Eine andere Ausführungsform der Erfindung ist eine Gipsplatte, die einseitig oder beidseitig außen mit Glasfaservlies kaschiert ist. Geeignet ist auch ein Glasfaservlies, welches auf der dem Gipskern abgewandten Seite beschichtet ist mit einem zumindest teilweise abgebundenen anorganischen Binder gemäß deutscher Patentanmeldung P 39 37 433. Als anorganische Binder werden dabei schnellbindende Calciumsulfat-Halbhydrate, schnellbindender Zement oder schnellbindende Zementgemische verwendet. Hochsulfatbeständiger Zement ist besonders bevorzugt.

In den nachfolgenden Beispielen sind bevorzugte Ausführungsformen sowie Test- und Vergleichsversuche zusammengestellt:

### BEISPIEL 1

Auf einer Produktionsanlage zur Herstellung von Gipskartonplatten wurden 12,5 mm dicke Gipskartonplatten hergestellt, welche außer Stuckgips und 0,22 Gew.-% geschnittenen Glasfasern (ca. 12 mm lang), 8 Gew.-% gemahlenes Gasbetongranulat enthielten. Die Korngröße des Granulats wies bei der Siebanalyse folgende Werte auf:

| | |
|---|---|
| > 2,0 mm | 0 % |
| 0 bis 2,0 mm | 100,0 % |
| 0 bis 1,0 mm | 91,7 % |
| 0 bis 0,5 mm | 58,2 % |
| 0 bis 0,125 mm | 17,8 % |
| 0 bis 0,09 mm | 10,6 %. |

Die Schüttdichte des Granulats betrug 0,68 kg/dm³. Die chemische Analyse des Granulats ergab
31 % CaO,
47 % SiO₂
4 % Al₂O₃
1 % MgO
2 % Fe₂O₃
1 % Alkalien
11 % Glühverlust.

Dem Gemisch wurden bei der Herstellung geringe Mengen Stärke, Schaummittel und feingemahlenes Dihydrat als Abbindebeschleuniger zugesetzt.

Die so hergestellten Platten wiesen bei der mechanischen Prüfung gleich gute Eigenschaften auf wie herkömmliche Gipskartonplatten (Feuerschutzplatten GKF nach DIN 18180). Die Prüfung des Feuerwiderstands an einer beidseitig, einlagig beplankten Metallständerwand ergab hingegen deutlich bessere Werte. So verzögerte sich das Herabfallen von Plattenstücken auf der Ofenseite um den Faktor 2. Die örtliche Braunfärbung von Karton auf der Raumseite sowie das örtliche Temperaturlimit (Delta T > 180°K; Wanderelement) verbesserte sich jeweils um ca. 20 %. Auch der Raumabschluß (Prüfung mit Wattebausch) verbesserte sich deutlich.

### BEISPIEL 2

Auf der gleichen Produktionsanlage wie im Beispiel 1 wurde eine 12,5 mm dicke, beidseitig mit Glasfaservlies kaschierte Gipsbauplatte hergestellt. Sie enthielt 0,25 Gew.-% geschnittene Glasfasern, 1 Gew.-% Vermiculite und 8 Gew.-% Gasbetongranulat, das auf kleiner 1 mm gemahlen war. Zum Vergleich wurde eine Platte hergestellt, die anstatt Gasbetongranulat 4,8 Gew.-% geblähte Perlite enthielt. Die mechanischen Eigenschaften der Platten waren wiederum nahezu identisch. Die Prüfung des Feuerwiderstands ergab wiederum deutlich bessere Werte. Es wurde festgestellt, daß bei einer beidseitig, einlagig beplankten Metallständerwand mit einer Mineralfaserdämmstoffeinlage eine Feuerwiderstandsdauer von 90 Minuten erreicht wird. Die Vergleichsplatte erreichte dabei nur eine Feuerwiderstandsdauer von 60 Minuten.

Offensichtlich verringert der erfindungsgemäße Zusatz von gemahlenem Gasbetongranulat sowohl die Bildung von Rissen, was bei den Feuerwiderstandsversuchen zu beobachten war, als auch die Schrumpfung. Orientierende Laborversuche haben dies bestätigt. Aus den Platten von Beispiel 2 wurden rechteckige Probekörper der Abmessung 200 mm x 100 mm herausgeschnitten. In einem Muffelofen wurden die Probekörper eine Stunde lang einer Temperatur von 920°C ausgesetzt. Danach wurden sie herausgenommen, auf Raumtemperatur abgekühlt und vermessen. Während die Vergleichsplatte aus Beispiel 2 um 6,8% schrumpfte, betrug die Schrumpfung der erfindungsgemäßen Platten nur 4,1%. Eine weitere erfindungsgemäße Platte, die 4 Gew.-% Gasbetongranulat enthielt, zeigte nach dem Test eine Kontraktion von 5,2%.

Der Gehalt an gemahlenem Gasbetongranulat muß mindestens 2 Gew.-% betragen. Gute Ergebnisse wurden im Bereich zwischen 5 und 10 Gew.-% erzielt. Es erscheint möglich, höhere Mengen an Zuschlagstoff bis zu 50 Gew.-% zuzugeben, jedoch ist Gips eine preiswertere Komponente als gemahlenes Gasbetongranulat. Es kann auch feuchtes Gasbetongranulat eingesetzt werden.

## Patentansprüche

1. Gipsplatte mit hohem Feuerwiderstand mit einem geschnittene mineralische Fasern, insbesondere Glasfasern, enthaltenden Gipskern, dadurch gekennzeichnet, daß der Gipskern mindestens 2 Gew.-% Gasbetongranulat enthält und dieses Granulat eine Korngröße bis 2 mm, vorzugsweise bis 1 mm aufweist.

2. Gipsplatte gemäß Anspruch 1, dadurch gekennzeichnet, daß der Gipskern 5 bis 10 Gew.-% Gasbetongranulat enthält.

3. Gipsplatte gemäß Anspruch 1 oder 2, dadurch gekennzeichnet, daß der Kern zusätzlich bis zu 2 Gew.-% Vermiculite enthält.

4. Gipsplatte gemäß einem der Ansprüche 1 bis 3, dadurch gekennzeichnet, daß der Gipskern außen mit Glasfaservlies kaschiert ist.

5. Gipsplatte gemäß Anspruch 4, dadurch gekennzeichnet, daß das Glasfaservlies auf der dem Gipskern abgewandten Seite beschichtet ist mit einem zumindest teilweise abgebundenen anorganischen Binder.

## Claims

1. A gypsum board with high fire resistance having a gypsum core containing cut mineral fibres, especially glass fibres, characterized in that said gypsum core contains at least 2% by weight of aerated concrete granules and said granules have grain sizes of up to 2 mm, preferably up to 1 mm.

2. The gypsum board according to claim 1, characterized in that said gypsum core contains from 5% to 10% by weight of aerated concrete granules.

3. The gypsum board according to claim 1 or 2, characterized in that said core additionally contains up to 2% by weight of vermiculite.

4. The gypsum board according to one of claims 1 to 3, characterized in that said gypsum core is backed with non-woven fibre glass on its outside.

5. The gypsum board according to claim 4, characterized in that said non-woven fibre glass is coated with an at least partially set inorganic binder on the side facing away from said gypsum core.

## Revendications

1. Plaque de plâtre à haute résistance au feu, comprenant un noyau en plâtre contenant des fibres minérales coupées, en particulier des fibres de verre, caractérisée en ce que le noyau en plâtre contient au moins 2 % en poids de granules de béton cellulaire et que ces granules ont une dimension allant jusqu'à 2 mm, de préférence jusqu'à 1 mm.

2. Plaque en plâtre selon la revendication 1, caractérisée en ce que le noyau en plâtre contient 5 à 10% en poids de granules de béton cellulaire.

3. Plaque en plâtre selon la revendication 1 ou 2, caractérisée en ce que le noyau contient, en outre, jusqu'à 2 % en poids de vermiculite.

4. Plaque en plâtre selon l'une des revendications 1 à 3, caractérisée en ce que la partie extérieure du noyau en plâtre est recouverte d'un non-tissé en fibres de verre.

5. Plaque en plâtre selon la revendication 4, caractérisée en ce que le non-tissé en fibres de verre est revêtu, du côté opposé au noyau en plâtre, d'un liant minéral au moins partiellement durci.
